# EUROPEAN PATENT SPECIFICATION

(11) **EP 0 512 614 B1**
(45) Date of publication and mention of the grant of the patent: **31.01.1996**
(21) Application number: 92201195.2
(22) Date of filing: 29.04.1992
(51) Int. Cl.: E04B 9/20, F16B 45/00

(54) **Hanger and hook therefor**
Aufhängeeinrichtung und Haken dafür
Organe de suspension et crochet pour ledit organe

(30) Priority: 03.05.1991 BE 9100410; 29.11.1991 DE 9114885 U
(43) Date of publication of application: 11.11.1992
(73) Proprietor: BLIEKENDAAL, Jacobus Albertus Paulus, NL-1214 NH Hilversum (NL)
(72) Inventor: Korte, Wilhelmus Everardus, NL-1271 AA Huizen (NL)
(74) Representative: 't Jong, Bastiaan Jacobus

(56) References cited:
- EP-A- 0 037 061
- CH-A- 408 364
- FR-A- 1 447 389
- US-A- 1 420 487

## Description

The invention relates to a hanger, such as a quick action hanger for a lowered ceiling, which comprises at least one hook formed by a straight piece of steel wire of generally circular cross-section with a bent end and a clamping member gripping slidably on the straight part of the hook. An object for suspending can be fixed to the clamping member or, as in the case of the said hanger for a lowered ceiling, the clamping member grips a second similar hook which extends slidably in the clamping member in opposite direction to the first hook. The distance from the bent ends of the hooks can be set to a desired value by sliding the hooks in the clamping member so that the object for hanging or the lowered ceiling comes to hang at the correct desired height.

A hanger of this kind is known from FR-A-1 447 389.

With the hanger according to the invention the wire in the curved portion of the hook is flattened in the transverse direction relative to the plane of the hook. The load at which the hook begins to bend outward, that is, the load bearing capacity, is hereby considerably enlarged.

It has been found in practice that the load bearing capacity normally requiring a wire diameter of 4 mm can already be obtained with a hook according to the invention at a wire diameter of 3 mm. This results in a material saving of over 40%. Such a saving is very considerable in view of the very small profit margins usual with such products.

It is assumed that the increase in the load bearing capacity is achieved on the one hand through the strengthening that occurs due to the plastic deformation during the mechanical deformation. The greater moment of resistance of the elongate section of the flattened wire can likewise contribute to the increase in the load bearing capacity.

According to a favourable embodiment of the invention the wire is flattened such that the thickness thereof is reduced to substantially three-quarters of the diameter.

A good transition from the curved portion of the hook to the straight portion is obtained when according to a preferred embodiment of the invention the straight piece of the wire is also flattened over a length of substantially twice the bending radius of the curved portion.

According to another favourable embodiment the wire at the end portion of the hook beyond the flattened portion is bent outward in the transverse direction relative to the plane of the hook. In addition to the favourable increase in the load bearing capacity the advantage is herein moreover obtained that in the mounted situation the hook can grip over the object hanging in the hook and thereby fixes this object. Furthermore, in the case of use for a lowered ceiling, the advantage is achieved that the hook no longer protrudes so that the risk of ceiling panels being damaged during arrangement is minimalized.

The invention also relates to and provides a hook for a hanger as claimed in claim 6.

The invention will be further elucidated in the following description with reference to the annexed figures.

Figure 1 shows a perspective view of a hanger according to the invention in the embodiment as ceiling hanger.

Figure 2 shows a cross section on larger scale along II-II in figure 1.

Figure 3 shows a perspective view corresponding with figure 1 of another embodiment of the hanger according to the invention.

Figure 4 shows a perspective view of the lower portion of the hanger of figure 3 in the situation of use.

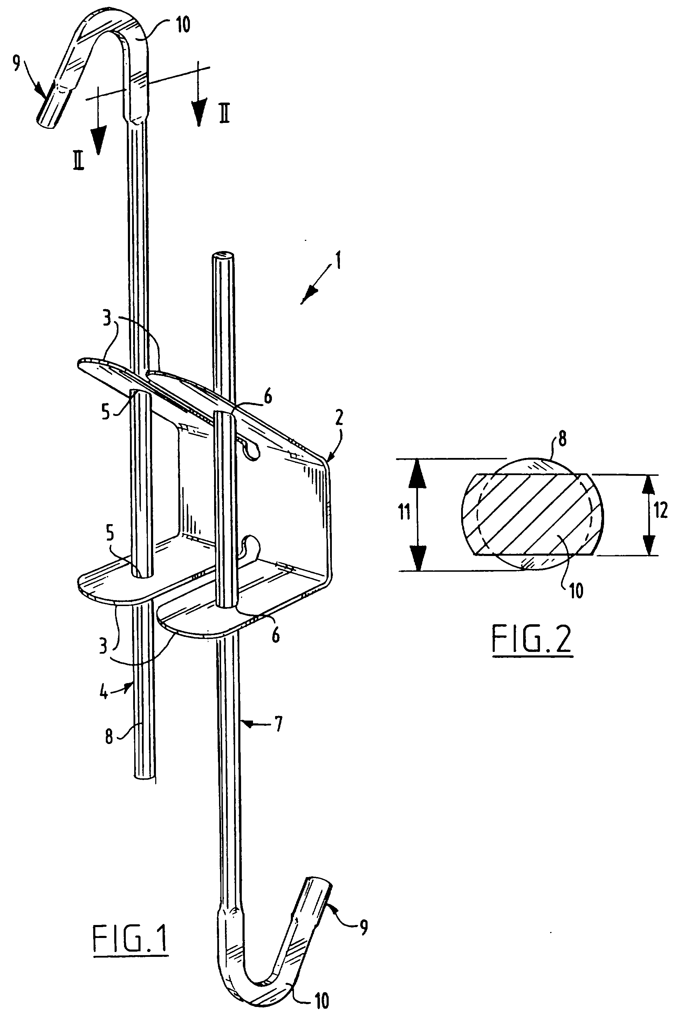

The ceiling hanger 1 shown in figure 1 comprises a V-shaped spring steel clamp 2, in the legs 3 of which are arranged holes 5 and 6. Placed in opposing. directions through the holes 5 and 6 are the respective hooks 4, 7. The hooks 4 and 7 can slide in the holes 5, 6 of the clamping member 2 when the legs 3 of this clamp 2 are pinched towards one another. By sliding the hooks 4, 7 in the clamping member 2 the curved ends thereof can be placed at a desired mutual distance. Ceiling hangers are per se known so that there will be no further discussion here of their uses. It can suffice to remark that the hanger with the upper curved end is suspended from a bearing construction, while a load engages in the lower curved end.

The hooks 4, 7 are manufactured from a straight piece of steel wire 8 with a bent end 9. The hook is slidable in the clamping member 2 with the straight piece 8. According to the invention the curved portion 10 of the hook 4 is flattened in the transverse direction. The thereby resulting cross section is elucidated in figure 2. As shown therein, the wire is preferably flattened to an extent such that the thickness 12 thereof amounts to substantially three-quarters of the diameter 11 of the original wire.

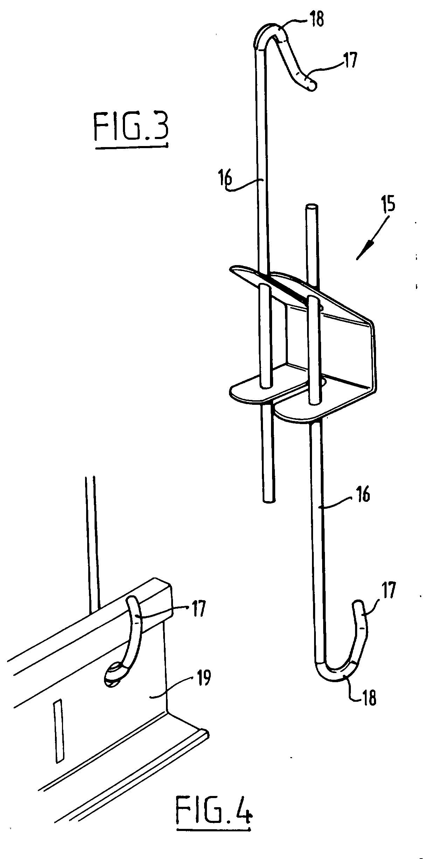

The embodiment of the invention as shown in figure 3 corresponds substantially with that of figure 1 so that only the differences will be discussed hereinafter. The hooks 16 of this ceiling hanger 15 are mechanically deformed in transverse direction relative to the plane of the hook by bending them outward in transverse direction relative to the plane of the hook so that the end portion of the hook 17 protrudes obliquely to the side. Moreover, a flattened portion 18 is formed in the ceiling hanger 15 of figure 3.

In the situation where the ceiling hanger 15 is used, as shown in figure 4, the hook is placed through a hole in a T-profile 19, onto the protruding flanges on the bottom end of which ceiling panels are placed. Owing to the portion 17 bent outward to the sides, which on the one hand results in a strengthening of the material and thereby an increase in the load bearing capacity, a locking of the profile 19 in upward direction is moreover achieved. The bent portion 17 protrudes above the body of the profile 19 so that it is prevented from moving upward. In order to achieve this the hook 16 is rotated slightly so that the portion 17 is moved towards the body of the profile 19. Also achieved hereby is that the end of the hook does not protrude, thus preventing the ceiling panels from being damaged by this end of the hook when they are placed.

It has been found that the curved portion 10 of the hook only begins to bend outward at a considerably higher load than a hook with the same diameter wire wherein the curved portion is not additionally deformed. An advantage of the invention is therefore that the load bearing capacity of the hanger and the hook according to the invention is increased at a given wire diameter or that wire of a smaller diameter can be used at a given load bearing capacity. A cost saving can hereby be achieved which is considerable for products of the present type.

## Claims

1. Hanger (1) comprising at least one hook (4) formed by a straight piece of steel wire (8) of generally circular cross-section with a bent end (9) and a clamp (2) gripping slidably on the straight part (8) of the hook, wherein the bent end (9) includes a curved portion (10) and wherein the wire in the curved portion (10) of the hook (4) is flattened, **characterized in that** the wire in the curved portion (10) of the hook (4) is flattened in the transverse direction relative to the plane of the hook.

2. Hanger as claimed in claim 1, wherein the thickness (12) of the wire is reduced by the flattening to substantially three-quarters of the diameter (11) of the wire (8).

3. Hanger as claimed in claim 1 or 2, wherein the straight piece (8) of the wire is also flattened over a length of substantially twice the bending radius of the curved portion (10).

4. Hanger as claimed in claim 1, comprising two hooks (4, 7) extending in opposing directions from a clamp (2) slidably receiving them, wherein the wire in the curved portion (10) of each hook (4, 7) is flattened in the transverse direction.

5. Hanger as claimed in any of the foregoing claims, wherein the wire at the end portion of the hook (17) beyond the flattened portion (18) is bent outward in the transverse direction relative to the plane of the hook, so that the end portion of the hook (17) protrudes obliquely to the side.

6. Hook for a hanger as claimed in any of the foregoing claims, formed by a straight piece of steel wire (8) of generally circular cross-section with a bent end (9), wherein the bent end (9) includes a curved portion (10) and wherein the wire in the curved portion (10) is flattened, **characterized in that** the wire in the curved portion (10) of the hook (4) is flattened in the transverse direction relative to the plane of the hook.

## Patentansprüche

1. Aufhängeeinrichtung (1), die wenigstens einen Haken (4) aufweist, der von einem geraden Stück aus Stahldraht (8) von allgemein kreisförmigem Querschnitt mit einem gebogenem Endteil (9) und einer Klemmvorrichtung (2) gebildet ist, die den geraden Abschnitt (8) des Hakens gleitbar faßt,
wobei der gebogene Endteil (9) einen gekrümmten Abschnitt (10) beinhaltet, und wobei der Draht in dem gekrümmten Abschnitt (10) des Hakens (4) abgeflacht ist,
**dadurch gekennzeichnet**,
daß der Draht in dem gekrümmten Abschnitt (10) des Hakens (4) in einer Richtung, die quer relativ zu der Ebene des Hakens ist, abgeflacht ist.

2. Aufhängeeinrichtung gemäß Anspruch 1,
bei der die Dicke (12) des Drahtes durch Abflachung bis (70) im wesentlichen Dreiviertel des Durchmessers (11) des Drahtes (8) reduziert ist.

3. Aufhängevorrichtung gemäß Anspruch 1 oder 2,
bei der der gerade Abschnitt (8) des Drahtes auch über eine Länge von im wesentlichen dem zweifachen Biegeradius des gekrümmten Abschnitts (10) abgeflacht ist.

4. Aufhängevorrichtung gemäß Anspruch 1,
die zwei Haken (4, 7) aufweist, die sich in entgegengesetzte Richtungen von der Klemmvorrichtung (2) erstrecken, welche diese gleitbar umfaßt, wobei der Draht in dem gekrümmten Abschnitt (10) jedes Hakens (4, 7) in der Querrichtung abgeflacht ist.

5. Aufhängevorrichtung gemäß einer der vorhergehenden Ansprüche,
bei der der Draht und der Endteil des Hakens (17) über den abgeflachten Abschnitt (18) hinaus nach außen in einer Richtung quer relativ zu der Ebene des Hakens gebogen ist, so daß der Endteil des Hakens (17) sich quer zur Seite erstreckt.

6. Haken für eine Aufhängeeinrichtung, wie in einem der vorhergehenden Ansprüche beansprucht, der durch einen geraden Abschnitt aus Stahldraht (8) von allgemein kreisförmigem Querschnitt mit einem gebogenem Endteil (9) gebildet ist, wobei der gebogene Endteil (9) einen gekrümmten Abschnitt (10) beinhaltet, und wobei der Draht in dem gekrümmten Abschnitt (10) abgeflacht ist,
**dadurch gekennzeichnet**,
daß der Draht in dem gekrümmten Abschnitt (10) des Hakens (4) in einer Richtung, die quer relativ zu der Ebene des Hakens ist, abgeflacht ist.

## Revendications

1. Dispositif de suspension (1) comportant au moins un crochet (4) formé par une partie rectiligne d'un fil d'acier (8), ayant une section de manière générale circulaire, munie d'une extrémité courbée (9) et une attache (2) saisissant de manière coulissante la partie rectiligne (8) du crochet, dans lequel l'extrémité courbée (9) comporte une partie incurvée (10) et dans lequel le fil existant dans la partie incurvée (10) du crochet (4) est aplati, caractérisé en ce que le fil situé dans la partie incurvée (10) du crochet (4) est aplati dans la direction transversale par rapport au plan du crochet.

2. Dispositif de suspension selon la revendication 1, dans lequel l'épaisseur (12) du fil est réduite en aplatissant pratiquement jusqu'aux trois quarts du diamètre (11) du fil (8).

3. Dispositif de suspension selon la revendication 1 ou 2, dans lequel la partie rectiligne (8) est aussi aplatie sur une longueur d'approximativement deux fois le rayon de courbure de la partie incurvée (10).

4. Dispositif de suspension selon la revendication 1, comportant deux crochets (4, 7) s'étendant dans des directions opposées à partir d'une attache (2) les recevant de manière coulissante, dans lequel le fil de la partie incurvée (10) de chaque crochet (4, 7) est aplati dans la direction transversale.

5. Dispositif de suspension selon l'une quelconque des revendications précédentes, dans lequel le fil situé au niveau de la partie d'extrémité (17) du crochet située au delà de la partie aplatie (18) est courbé vers l'extérieur dans la direction transversale par rapport au plan du crochet, de sorte que la partie d'extrémité (17) du crochet fait saillie en oblique sur le côté.

6. Crochet pour dispositif de suspension selon l'une quelconque des revendications précédentes, formé par une partie rectiligne de fil d'acier (8) ayant une section transversale de manière générale circulaire, munie d'une extrémité courbée (9), dans lequel l'extrémité courbée (9) comporte une partie incurvée (10) et dans lequel le fil situé dans la partie incurvée (10) est aplati, caractérisé en ce que fil situé dans la partie incurvée (10) du crochet (4) est aplati dans la direction transversale par rapport au plan du crochet.
